(19) Europäisches Patentamt
European Patent Office
Office européen des brevets

(11) **EP 2 534 398 B1**

(12) **EUROPÄISCHE PATENTSCHRIFT**

(45) Veröffentlichungstag und Bekanntmachung des Hinweises auf die Patenterteilung:
**25.11.2015   Patentblatt 2015/48**

(21) Anmeldenummer: **10790963.2**

(22) Anmeldetag: **14.12.2010**

(51) Int Cl.:
***F16H 61/02*** *(2006.01)*

(86) Internationale Anmeldenummer:
**PCT/EP2010/069612**

(87) Internationale Veröffentlichungsnummer:
**WO 2011/098174 (18.08.2011 Gazette 2011/33)**

(54) **VERFAHREN ZUR BESTIMMUNG UND SCHALTUNG DES OPTIMALEN GANGES VOR DER EINFAHRT IN EINE KURVE BEI EINEM KRAFTFAHRZEUG UMFASSEND EIN AUTOMATGETRIEBE**

METHOD FOR DETERMINING AND SELECTING THE OPTIMAL GEAR BEFORE DRIVING INTO A CURVE FOR A MOTOR VEHICLE HAVING AN AUTOMATIC TRANSMISSION

PROCÉDÉ DE DÉTERMINATION ET DE COMMANDE DE LA VITESSE OPTIMALE AVANT L'ABORD D'UNE COURBE POUR UN VÉHICULE AUTOMOBILE COMPRENANT UNE BOÎTE DE VITESSES AUTOMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.02.2010   DE 102010001873**

(43) Veröffentlichungstag der Anmeldung:
**19.12.2012   Patentblatt 2012/51**

(73) Patentinhaber: **ZF Friedrichshafen AG**
**88038 Friedrichshafen (DE)**

(72) Erfinder:
• **KIEFER, Michael**
**88069 Tettnang-Walchesreute (DE)**
• **SCHULER, Franz-Josef**
**88079 Kressbronn (DE)**
• **REITEMEIER, Uwe**
**88074 Meckenbeuren (DE)**
• **MAUS, Andreas**
**88045 Friedrichshafen (DE)**

(56) Entgegenhaltungen:
**EP-A1- 0 831 255      EP-A2- 1 750 038**
**DE-A1- 10 030 050     DE-A1-102006 030 528**

EP 2 534 398 B1

**Beschreibung**

Die vorliegende Erfindung betrifft ein Verfahren zur Bestimmung und Schaltung des optimalen Ganges vor der Einfahrt in eine Kurve bei einem Kraftfahrzeug umfassend ein Automatgetriebe gemäß dem Oberbegriff des Patentanspruchs 1.

Die Entwicklung im Automobilbereich erfordert eine immer effizientere Nutzung der Ressourcen hinsichtlich des Verbrauchs und der Schadstoffemissionen, wobei diese Anforderungen für die Teilkomponenten eines Fahrzeugs, insbesondere für die Automatgetriebe gelten. Aus diesem Grunde sind mit modernen Automatgetrieben immer mehr Gänge realisierbar; durch die vielen Gänge kann der Verbrennungsmotor in vorteilhafter Weise öfter im optimalen Betriebspunkt betrieben werden, was wiederum eine entsprechende Optimierung der Schaltstrategie zur Ansteuerung der Gänge des Getriebes erfordert. Hierbei ist wichtig, den für die gegebene Fahrsituation hinsichtlich des Verbrauchs günstigsten Gang bereitzustellen.

Aus der DE 10 2006 030 528 A1 der Anmelderin ist ein Verfahren zur vorausschauenden Bestimmung von Übersetzungsänderungen in elektronisch gesteuerten Getrieben für Kraftfahrzeuge bekannt. Bei dem bekannten Verfahren werden Umgebungsdaten, Fahrer-/Fahrzeugdaten und ein erster Gangvorschlag einem Korrekturmodul zugeführt, durch welches der erste Gangvorschlag angepasst wird, wobei das Korrekturmodul zumindest ein Fahrsituationsmodul besitzt, durch das eine aktuelle oder vorausliegende Fahrsituation erkennbar ist. Des Weiteren umfasst das Korrekturmodul ein Bestimmungsmodul, an welches Informationen über die erkannte Fahrsituation geleitet werden und durch welches ein zweiter Übersetzungsvorschlag bestimmbar ist.

Zudem ist im Rahmen des bekannten Verfahrens vorgesehen, dass im Bestimmungsmodul in Abhängigkeit von zumindest einer erkannten vorausliegenden Fahrsituation und Fahrer-/Fahrzeugdaten in einem ersten Schritt überprüft wird, ob mindestens eine Schaltsituation für einen Eingriff vorliegt, wobei wenn mindestens eine Schaltsituation vorliegt in einem zweiten Schritt überprüft wird, ob Bedingungen für die Durchführung des jeweiligen Eingriffes für eine der erkannten Schaltsituationen erfüllt sind.

Wenn eine Schaltsituation eingetreten ist und die Bedingungen für die Durchführung eines Eingriffes erfüllt sind, wird in einem dritten Schritt der erste Gangvorschlag angepasst und ein angepasster zweiter Gangvorschlag gebildet, welcher an das Getriebe weitergeleitet wird.

Bei dem bekannten Verfahren ist vorgesehen, dass auch eine Mehrfach-Rückschaltung um mehrere Gangstufen erfolgen kann, wobei ein optionaler, für die eine erlaubte Übersatzungsstufe beschreibende Gangzahlfunktion relevanter Sportlichkeitsgrad durch Auswertung von Fahrzeugdaten und/oder durch Vorgaben der Getriebesteuerung und/oder durch Veränderung von Fahrzeugeinstellungen seitens des Fahrers bestimmt werden kann. Eine Ermittlung einer maximal möglichen Kurvengeschwindigkeit ist nicht vorgesehen.

Der Sportlichkeitsgrad kann hierbei beispielsweise gemäß der EP 897496 B1 der Anmelderin ermittelt werden. Im Rahmen des darin offenbarten Verfahrens zur Bewertung einer Kurvenfahrt bei einem Automatgetriebe eines Fahrzeuges mittels eines elektronischen Getriebesteuergerätes mit einer Berechnungseinheit, einem Mikro-Controller, einer Speichereinrichtung und einer Steuerungseinrichtung zur Ansteuerung eines hydraulischen Getriebesteuergerätes wird aus von einer Messeinrichtung an Rädern des Fahrzeuges gemessenen Raddrehzahlen in einer ersten Verarbeitungsfunktion von der Berechnungseinheit eine Querbeschleunigung des Fahrzeuges ermittelt, wobei in einer weiteren Verarbeitungsfunktion aus einer Fahrzeugquerbeschleunigung und einer Fahrzeuggeschwindigkeit ein Fahrertyp-Sollwert bestimmt wird.

Ferner wird in einem weiteren Schritt aus einem Inkrement zwischen dem Fahrertyp-Sollwert und einem Fahrertyp-Istwert eine Schaltkennlinie aus mehreren jeweils einem bestimmten Fahrertyp bzw. Kurvenfahrstil zugeordneten Schaltkennlinien ermittelt. Des weiteren wird in einer Unterscheidungsfunktion geprüft, ob des Inkrement gleich dem Nullwert ist, wobei entsprechend dem Ergebnis dieser Prüfung ein Zähler eingestellt wird, dessen Zählerwerte in definierte, einem bestimmten Fahrertyp bzw. Kurvenfahrstil zugeordnete Zählerwertbereiche unterteilt sind und wobei mit aufsteigender Zahl des Zählerwertebereiches die Sportlichkeit höher eingeschätzt wird.

Aus der DE 4201142 C2 ist eine Fahrgeschwindigkeitsbegrenzungsvorrichtung für ein Kraftfahrzeug mit einer fahrzeuggestützten Navigationsvorrichtung bekannt, die fortlaufend den Standort des Kraftfahrzeuges bestimmt und mit einer Straßenkarte vergleicht, umfassend eine Einrichtung zur Vorgabe eines ortsabhängigen Geschwindigkeitssollwertes, während sich das Kraftfahrzeug auf einer Straße einer Kurve nähert, und einen Fahrgeschwindigkeitsfühler zur Abgabe eines Geschwindigkeitssollwertes.

Die bekannte Fahrgeschwindigkeitsbegrenzungsvorrichtung umfasst ferner eine Steuereinrichtung, die bei Überschreitung des ortsabhängig vorgegebenen Geschwindigkeitssollwertes durch den aktuellen Geschwindigkeitsistwert eine Warneinrichtung betätigt und/oder eine Verminderung der Fahrgeschwindigkeit auf den Geschwindigkeitssollwert auslöst; ferner ist vorgesehen, dass die Navigationsvorrichtung Informationen über die Kurve an die Steuereinrichtung liefert, wenn die Navigationsvorrichtung erkennt, dass sich der Standort des Kraftfahrzeuges vor dieser Kurve befindet, wobei die Information über die Kurve wenigstens den Krümmungsradius enthält und wobei die Steuereinrichtung aufgrund der von der Navigationsvorrichtung gelieferten Informationen eine Grenzgeschwindigkeit berechnet, mit der das Kraftfahrzeug die Kurve sicher durchfahren kann, und als Geschwindigkeitssollwert vorgibt.

Hierbei wird das Fahrzeug durch die Fahrgeschwindigkeitsbegrenzungsvorrichtung abgebremst, wenn die Fahrgeschwindigkeit höher als die Grenzgeschwindigkeit ist; dies kann auch durch Schließen der Drosselklappe des Fahrzeugs erfolgen, d.h. durch einen Motoreingriff.

In nachteiliger Weise wird der eingelegte Gang beibehalten, was dazu führen kann, dass der eingelegte Gang nach einer eingeleiteten Fahrgeschwindigkeitsbegrenzung ungeeignet ist, um das Fahrzeug gemäß dem Wunsch des Fahrers wieder zu beschleunigen; ferner wird das Fahrverhalten des Fahrers hinsichtlich Sportlichkeit nicht berücksichtigt, was den Fahrkomfort beeinträchtigen kann.

Aus der EP 0 831 255 B1 geht ferner ein gattungsgemäßes Verfahren und eine Fahrzeugsteuerungsvorrichtung hervor, umfassend eine Einrichtung zum Erhalten von Straßeninformation, eine Momentanpositions-Sensoreinrichtung zum Detektieren einer momentanen Position auf der Strasse, ein Automatgetriebe, eine Einrichtung zum Ermitteln eines Steuerparameters im Automatgetriebe in Reaktion auf die detektierte momentane Position und die erhaltene Straßeninformation.

Des weiteren umfasst die bekannte Fahrzeugsteuerungsvorrichtung eine Verlangsamungs-Sensoreinrichtung zum Detektieren einer Verlangsamungsoperation des Fahrers und eine Ausführungseinrichtung zum Ausführen der ermittelten Steuerparameter, wenn die Verlangsamungsoperation des Fahrers durch die Verlangsamungs-Sensoreinrichtung detektiert wird, wobei die Steuerparameter-Ermittlungseinrichtung eine Vorauspositions-Sensoreinrichtung zum Detektieren einer spezifischen Position vor dem Fahrzeug in Reaktion auf die detektierte momentane Position und die erhaltene Straßeninformation, eine Abstandsberechnungseinrichtung zum Berechnen eines Abstandes von der momentanen Position zu der spezifischen Position, eine Verlangsamungs-Folgerungseinrichtung zum Folgen eines Bedarfs einer Verlangsamung in Abhängigkeit von dem berechneten Abstand vor der momentanen Position zu der spezifischen Position und eine Auswahleinrichtung zum selektiven Bestimmen des Steuerparameters, wenn die Verlangsamungs-Folgerungseinrichtung den Bedarf der Verlangsamung ableitet beinhaltet.

Hierbei kann der Steuerparameter ein Getriebeübersetzungsverhältnisbereich des Automatgetriebes oder ein oberster und/oder unterster Grenzwert von Getriebeübersetzungsverhältnissen des Automatgetriebes sein; die spezifische Position kann ein Eintritt in eine Kurve oder Straßenkreuzung sein.

Im Rahmen der EP 0 831 255 B1 wird das Fahrverhalten des Fahrers nicht ausgewertet und in diesem Zusammenhang hinsichtlich der Sportlichkeit nicht berücksichtigt, was den Fahrkomfort aus Sicht des Fahrers beeinträchtigen kann.

Der vorliegenden Erfindung liegt die Aufgabe zugrunde, ein Verfahren zur Bestimmung und Schaltung des optimalen Ganges vor der Einfahrt in eine Kurve bei einem Kraftfahrzeug umfassend ein Automatgetriebe anzugeben, durch dessen Durchführung vorausschauend und dem Fahrstil entsprechend der optimale Gang gewählt werden kann.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Verfahren zur Bestimmung und Schaltung des optimalen Ganges vor der Einfahrt in eine Kurve bei einem Kraftfahrzeug umfassend ein Automatgetriebe vorgeschlagen, im Rahmen dessen eine Kurvengrenzgeschwindigkeit für eine von einem Navigationsgerät mittels einer digitalen Karte im vorausliegenden Straßenverlauf erkannte Kurve in Abhängigkeit von Fahrzeug- und Kurven- bzw. Fahrbahndaten sowie eines Sportlichkeitszählers bestimmt wird, wobei anhand der bestimmten Kurvengrenzgeschwindigkeit und des Sportlichkeitszählers der aktuelle optimale Gang für die vorausliegende Kurve bestimmt wird.

Die Bestimmung der Kurvengrenzgeschwindigkeit und des optimalen Ganges kann beispielsweise anhand von zumindest einem in der Getriebesteuerung abgelegten Kennfeld erfolgen.

Gemäß einer besonders vorteilhaften Ausführungsform der Erfindung wird bei Abweichung des eingelegten Gangs vom aktuellen optimalen Gang eine einfache Rückschaltung in den optimalen Gang durchgeführt, wobei für den Fall, dass eine Rückschaltung in den aktuellen optimalen Gang eine Rückschaltung um mehrere Gangstufen erfordert, die Rückschaltung gestuft erfolgt und wobei die Rückschaltung dann erfolgt, wenn nach der Bestimmung des aktuellen optimalen Ganges vor der vorausliegenden Kurve eine Fahreraktion, die eine Verzögerung des Fahrzeugs bewirkt und/oder eine Reduzierung der Fahrzeuggeschwindigkeit vorliegt. Eine Fahreraktion, die eine Verzögerung des Fahrzeugs bewirkt kann beispielsweise die Betätigung der Bremse oder das Vorliegen eines Bremsdrucks sein, der eine vorgegebene Schwelle überschreitet.

Gemäß einer besonders vorteilhaften Weiterbildung der Erfindung wird gleichzeitig mit dem Einleiten der Rückschaltung ein einstellbarer Timer gestartet, bis zu dessen Ablauf eine weitere Rückschaltung nicht möglich ist. Wenn der Timer abgelaufen ist, wird der aktuelle optimale Gang erneut berechnet und erneut geprüft, ob eine Fahreraktion, die eine Verzögerung des Fahrzeugs bewirkt und/oder eine Reduzierung der Fahrzeuggeschwindigkeit vorliegt, wobei, wenn dies der Fall ist und der eingelegte Gang vom neu berechneten aktuellen optimalen Gang abweicht, eine erneute einfache Rückschaltung durchgeführt wird, wobei gleichzeitig ein einstellbarer Timer gestartet wird, bis zu dessen Ablauf eine weitere Rückschaltung nicht möglich ist.

Dieser Verfahrensschritt wird solange wiederholt, bis der aktuelle optimale Gang vom eingelegten Gang nicht abweicht oder bis keine Fahreraktion, die eine Verzögerung des Fahrzeugs bewirkt und/oder keine Reduzierung der Fahrzeuggeschwindigkeit vorliegt.

Durch die gestufte Rückschaltung für den Fall, dass eine Rückschaltung in den aktuellen optimalen Gang eine Rückschaltung um mehrere Gangstufen erfordert, wird gewährleistet, dass der aktuelle optimale Gang der seitens des Fahrers gewünschten Fahrweise entspricht. Beispielsweise kann anhand des zuerst berechneten optimalen Ganges eine Rückschaltung vom siebten in den fünften Vorwärtsgang erforderlich sein, wobei wenn nach der ersten Rückschaltung in den sechsten Vorwärtsgang der Fahrer die Bremse nicht mehr betätigt oder die Fahrzeuggeschwindigkeit nicht weiter reduziert wird der erneut berechnete aktuelle optimale Gang dem eingelegten Gang entspricht, so dass eine weitere Rückschaltung nicht mehr erforderlich ist. Vielmehr würde eine erneute Rückschaltung nicht mehr der seitens des Fahrers gewünschten Fahrweise entsprechen.

Die Bestimmung des Sportlichkeitszählers erfolgt nach aus dem Stand der Technik bekannter Art und Weise anhand einer Auswertung der Fahrweise des Fahrers und der hierfür relevanten Parameter, wie beispielsweise Motordrehzahl, Geschwindigkeit und/oder Gangwahl bei Kurvenfahrt und vorzugsweise gemäß der EP 897496 B1 der Anmelderin, die vollinhaltlich Gegenstand dieser Beschreibung sein soll.

Durch die erfindungsgemäße Konzeption wird ein Verfahren zur Bestimmung und Schaltung des optimalen Ganges vor der Einfahrt in eine Kurve bei einem Kraftfahrzeug umfassend ein Automatgetriebe zur Verfügung gestellt, durch dessen Durchführung vorausschauend und dem Fahrstil bzw. der gewünschten Fahrweise entsprechend der optimale Gang gewählt und geschaltet wird.

Die Erfindung wird im Folgenden anhand der beigefügten Figuren beispielhaft näher erläutert. Es zeigen:

Figur 1: Eine schematisches Ablaufdiagramm zur Veranschaulichung der Schritte des erfindungsgemäßen Verfahrens; und

Figur 2: Ein Diagramm, welches den zeitlichen Verlauf des einzulegenden optimalen Ganges gemäß der Erfindung und den zeitlichen Verlauf des Sollganges gemäß einer herkömmlichen Fahrstrategie veranschaulicht.

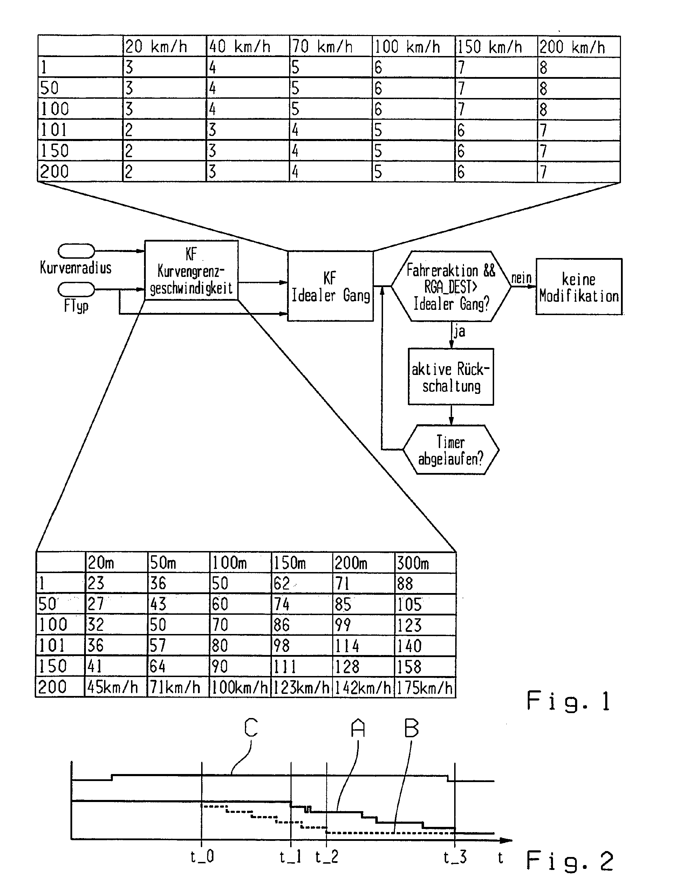

Gemäß der Erfindung und bezugnehmend auf Figur 1 wird in einem ersten Schritt von einem im Fahrzeug vorgesehenen Navigationsgerät mittels einer digitalen Karte eine vorausliegende Kurve erkannt, wobei anschließend anhand der Fahrzeug- und Kurven- bzw. Fahrbahndaten die absolute Kurvengrenzgeschwindigkeit, d.h. die bei einem bestimmten Kurvenradius, einer bestimmten Kurvenüberhöhung und vorgegebenen Fahrzeugdaten maximal mögliche Geschwindigkeit ohne Überschreiten der Haftgrenze der Reifen berechnet wird.

Beispielsweise kann die absolute Kurvengrenzgeschwindigkeit $v\_grenz$ für ein Fahrzeug mit Spurweite 1,5 m und Schwerpunkthöhe 0,6 m bei maximalem Kraftschlussbeiwert $\mu_r$ = 0,8, Kurvenradius $r_k$ und Kurvenüberhöhung $\beta$ anhand der Formel

$$v\_grenz = 11{,}28\sqrt{\frac{(\mu_r + \tan\beta)r_k}{1 - \mu_r\tan\beta}}\,km/h$$ berechnet werden.

Vorzugsweise wird gemäß der Erfindung angenommen, dass Kurvenüberhöhung $\beta$ 0° beträgt.

Die für das vorliegende Verfahren relevante Kurvengrenzgeschwindigkeit wird aus der absoluten Kurvengrenzgeschwindigkeit in Abhängigkeit eines Sportlichkeitszählers des Fahrers ermittelt, wobei die Kurvengrenzgeschwindigkeit mit steigendem Sportlichkeitszähler ebenfalls steigt und umgekehrt; bei maximalem Sportlichkeitszähler entspricht die Kurvengrenzgeschwindigkeit der absoluten Kurvengrenzgeschwindigkeit.

Wie Figur 1 zu entnehmen ist, kann ein erstes Kennfeld KF_Kurvengrenzgeschwindigkeit gebildet und in der Getriebesteuerung abgelegt werden, mittels dessen die für das vorliegende Verfahren relevante Kurvengrenzgeschwindigkeit als Funktion des Sportlichkeitszählers FTyp und der Fahrbahndaten ermittelt wird, wobei für den Fall, dass die Kurvenüberhöhung $\beta$ 0° beträgt, die Kurvengrenzgeschwindigkeit für eine vorgegebene Spurweite, eine vorgegebene Schwerpunkthöhe und für einen vorgegebenen maximalen Kraftschlussbeiwert eine Funktion des mittels des Navigationsgerätes und der digitalen Karte gelieferten Kurvenradius $r_k$ und des Sportlichkeitszählers FTyp ist.

Bei dem gezeigten Beispiel nimmt der Sportlichkeitszähler FTyp Werte zwischen 1 und 200 an, wobei der Wert 200 den maximalen Wert darstellt, so dass beispielsweise bei einem Kurvenradius von 100 m die dem maximalen Wert für den Sportlichkeitszähler FTyp entsprechende Kurvengrenzgeschwindigkeit 100 km/h beträgt; im Vergleich dazu ist bei gleichem Kurvenradius die dem minimalen Wert für den Sportlichkeitszähler FTyp entsprechende Kurvengrenzgeschwindigkeit wesentlich geringer und beträgt 50 km/h. Auf diese Weise wird die gemäß dem erfindungsgemäßen Verfahren bestimmte Kurvengrenzgeschwindigkeit der Fahrweise des Fahrers angepasst.

Des weiteren kann ein zweites Kennfeld KF_Idealer_Gang gebildet und in der Getriebesteuerung abgelegt werden, mittels dessen der aktuelle optimale Gang als Funktion der für das vorliegende Verfahren relevanten Kurvengrenzgeschwindigkeit, die aus dem Kennfeld KF_Kurvengrenzgeschwindigkeit bestimmbar ist und des Sportlichkeitszählers FTyp bestimmt wird.

Hierbei ist vorgesehen, dass ein hoher Wert für den Sportlichkeitszähler FTyp einem niedrigen Gang und ein niedriger Wert für den Sportlichkeitszähler FTyp einem hohen Gang entspricht. Beispielsweise wird für den maximalen Wert für den Sportlichkeitszähler FTyp ein in Abhängigkeit von der Fahrzeuggeschwindigkeit und der Motordrehzahl möglichst niedriger Gang als optimaler Gang bestimmt; für den minimalen Wert für den Sportlichkeitszähler FTyp wird ein möglichst hoher Gang als optimaler Gang bestimmt.

Beispielsweise ist, wie anhand Figur 1 veranschaulicht, bei einem Getriebe mit acht Vorwärtsgängen der erfindungsgemäß vorgeschlagene aktuelle optimale Gang für eine Grenzgeschwindigkeit von 100 km/h und einen Sportlichkeitszähler zwischen 101 und 200 der fünfte Vorwärtsgang, was in einer sportlichen Fahrweise resultiert, wobei der vorgeschlagene aktuelle optimale Gang für eine Grenzgeschwindigkeit von 100 km/h und einen Sportlichkeitszähler zwischen 1 und 100 km/h der sechste Vorwärtsgang ist.

Nach der Bestimmung des aktuellen optimalen Ganges wird geprüft, ob der aktuelle optimale Gang vom eingelegten Gang RGA_DEST abweicht, wobei eine Rückschaltung dann erfolgt, wenn eine Abweichung festgestellt wird und eine Fahreraktion, die eine Verzögerung des Fahrzeugs bewirkt und/oder eine Reduzierung der Fahrzeuggeschwindigkeit vorliegt.

Gemäß der Erfindung wird gleichzeitig mit dem Einleiten der Rückschaltung ein einstellbarer Timer gestartet, bis zu dessen Ablauf eine weitere Rückschaltung nicht möglich ist. Wenn der einstellbare Timer abgelaufen ist, wird der aktuelle optimale Gang erneut berechnet und es wird der vorangehende Schritt erneut durchgeführt bis der aktuelle optimale Gang vom eingelegten Gang RGA_DEST nicht abweicht oder bis keine Fahreraktion, die eine Verzögerung des Fahrzeugs bewirkt und/oder keine Reduzierung der Fahrzeuggeschwindigkeit vorliegt.

Für den Fall, dass eine Rückschaltung in den aktuellen optimalen Gang eine Rückschaltung um mehrere Gangstufen erfordert, erfolgt die Rückschaltung gestuft, analog zur beschriebenen Vorgehensweise.

Ferner kann gemäß der Erfindung vorgesehen sein, dass eine Rückschaltung dann erfolgt, wenn die Entfernung des Fahrzeugs zur vorausliegenden Kurve innerhalb eines applizierbaren Bereiches liegt.

Durch das erfindungsgemäße Verfahren wird gewährleistet, dass der optimale Gang rechtzeitig vor der Kurve gewählt und geschaltet wird, was den Fahrkomfort signifikant verbessert. Zur Veranschaulichung der Unterschiede zur herkömmlichen Fahrstrategie sind in Figur 2 die zeitlichen Verläufe des einzulegenden optimalen Ganges gemäß der Erfindung, des Sollganges gemäß einer herkömmlichen Fahrstrategie sowie des Bremsdrucks veranschaulicht.

Wie den in Figur 2 eingezeichneten beispielhaften Verläufen zu entnehmen ist, wird erfindungsgemäß rechtzeitig vor einer vorausliegenden Kurve und beginnend zum Zeitpunkt t_0 eine gestufte Rückschaltung um sechs Gangstufen durchgeführt, wobei bereits zum Zeitpunkt t_2 der optimale Gang eingelegt ist; der entsprechende Verlauf ist durch Kurve B wiedergegeben.

Bei einer Rückschaltung gemäß einer herkömmlichen Fahrstrategie würde die Rückschaltung zum späteren Zeitpunkt t_1 beginnen, wobei dann der optimale Gang zum späten Zeitpunkt t_3 eingelegt ist. Der entsprechende Verlauf ist durch Kurve A wiedergegeben, wobei Kurve C den Bremsdruckverlauf als Funktion der Zeit t wiedergibt, aus dem hervorgeht, dass die Bremse während der Durchführung des erfindungsgemäßen Verfahrens durch den Fahrer betätigt ist.

Bezugszeichen

| | |
|---|---|
| FTyp | Sportlichkeitszähler |
| RGA_DEST | eingelegter Gang |
| A | Zeitlicher Verlauf des Sollganges gemäß einer herkömmlichen Fahrstrategie |
| B | Zeitlicher Verlauf des einzulegenden optimalen Ganges gemäß der Erfindung |
| C | Zeitlicher Verlauf des Bremsdrucks |

**Patentansprüche**

1. Verfahren zur Bestimmung und Schaltung des optimalen Ganges vor der Einfahrt in eine Kurve bei einem Kraftfahrzeug umfassend ein Automatgetriebe, wobei eine Kurvengrenzgeschwindigkeit für eine von einem Navigationsgerät mittels einer digitalen Karte im vorausliegenden Straßenverlauf erkannte Kurve in Abhängigkeit von Fahrzeug- und Kurven- bzw. Fahrbahndaten bestimmt wird, **dadurch gekennzeichnet, dass** die Kurvengrenzgeschwindigkeit zusätzlich in Abhängigkeit eines Sportlichkeitszählers (FTyp) bestimmt wird, wobei anhand der bestimmten Kurvengrenzgeschwindigkeit und des Sportlichkeitszählers (FTyp) der aktuelle optimale Gang für die vorausliegende Kurve bestimmt wird und wobei nach der Bestimmung des aktuellen optimalen Ganges geprüft wird, ob der aktuelle optimale Gang vom eingelegten Gang (RGA_DEST) abweicht, wobei eine Rückschaltung in den aktuellen optimalen Gang dann erfolgt, wenn eine Abweichung festgestellt wird und eine Fahreraktion, die eine Verzögerung des Fahrzeugs bewirkt und/oder eine Reduzierung der Fahrzeuggeschwindigkeit vorliegt.

2. Verfahren zur Bestimmung und Schaltung des optimalen Ganges vor der Einfahrt in eine Kurve, nach Anspruch 1, **dadurch gekennzeichnet, dass** für den Fall, dass eine Rückschaltung in den aktuellen optimalen Gang eine Rückschaltung um mehrere Gangstufen erfordert, die Rückschaltung gestuft erfolgt.

3. Verfahren zur Bestimmung und Schaltung des optimalen Ganges vor der Einfahrt in eine Kurve, nach Anspruch 1 oder 2, **dadurch gekennzeichnet, dass** eine Rückschaltung dann erfolgt, wenn die Entfernung des Fahrzeugs zur vorausliegenden Kurve innerhalb eines applizierbaren Bereiches liegt.

4. Verfahren zur Bestimmung und Schaltung des optimalen Ganges vor der Einfahrt in eine Kurve, nach Anspruch 1, 2 oder 3, **dadurch gekennzeichnet, dass** gleichzeitig mit dem Einleiten der Rückschaltung ein einstellbarer Timer gestartet wird, bis zu dessen Ablauf eine weitere Rückschaltung nicht möglich ist, wobei, wenn der einstellbare Timer abgelaufen ist, der aktuelle optimale Gang erneut bestimmt wird und erneut geprüft wird, ob der aktuelle optimale Gang vom eingelegten Gang (RGA_DEST) abweicht und ob eine Fahreraktion, die eine Verzögerung des Fahrzeugs bewirkt und/oder eine Reduzierung der Fahrzeuggeschwindigkeit vorliegt, wobei, wenn diese Voraussetzungen vorliegen eine erneute Rückschaltung durchgeführt wird und wobei dieser Schritt solange wiederholt wird, bis der aktuelle optimale Gang vom eingelegten Gang (RGA_DEST) nicht abweicht oder bis keine Fahreraktion, die eine Verzögerung des Fahrzeugs bewirkt und/oder keine Reduzierung der Fahrzeuggeschwindigkeit vorliegt.

5. Verfahren zur Bestimmung und Schaltung des optimalen Ganges vor der Einfahrt in eine Kurve, nach Anspruch 1, 2, 3 oder 4, **dadurch gekennzeichnet, dass** zur Bestimmung der Kurvengrenzgeschwindigkeit zuerst die absolute Kurvengrenzgeschwindigkeit (v_grenz), d.h. die bei einem bestimmten Kurvenradius, einer bestimmten Kurvenüberhöhung und vorgegebenen Fahrzeugdaten maximal mögliche Geschwindigkeit ohne Überschreiten der Haftgrenze der Reifen berechnet wird, wobei die Kurvengrenzgeschwindigkeit aus der absoluten Kurvengrenzgeschwindigkeit in Abhängigkeit eines Sportlichkeitszählers (FTyp) des Fahrers ermittelt wird, wobei die Kurvengrenzgeschwindigkeit mit steigendem Sportlichkeitszähler (FTyp) ebenfalls steigt und umgekehrt und dass der aktuelle optimale Gang als Funktion der Kurvengrenzgeschwindigkeit und des Sportlichkeitszählers (FTyp) bestimmt wird, wobei ein hoher Wert für den Sportlichkeitszähler (FTyp) einem niedrigen Gang und ein niedriger Wert für den Sportlichkeitszähler (FTyp) einem hohen Gang entspricht.

6. Verfahren zur Bestimmung und Schaltung des optimalen Ganges vor der Einfahrt in eine Kurve, nach Anspruch 5, **dadurch gekennzeichnet, dass** ein erstes Kennfeld KF_Kurvengrenzgeschwindigkeit gebildet und in der Getriebesteuerung abgelegt wird, mittels dessen die Kurvengrenzgeschwindigkeit als Funktion des Sportlichkeitszählers FTyp und der Fahrbahndaten ermittelt wird, wobei für den Fall, dass die Kurvenüberhöhung $\beta$ 0° beträgt, die Kurvengrenzgeschwindigkeit für eine vorgegebene Spurweite, eine vorgegebene Schwerpunkthöhe und für einen vorgegebenen maximalen Kraftschlussbeiwert eine Funktion des mittels des Navigationsgerätes und der digitalen Karte gelieferten Kurvenradius $r_k$ und des Sportlichkeitszählers (FTyp) ist und dass ein zweites Kennfeld KF_Idealer_Gang gebildet und in der Getriebesteuerung abgelegt wird, mittels dessen der aktuelle optimale Gang als Funktion der Kurvengrenzgeschwindigkeit, die aus dem Kennfeld KF_Kurvengrenzgeschwindigkeit bestimmbar ist und des Sportlichkeitszählers (FTyp) bestimmt wird.

7. Verfahren zur Bestimmung und Schaltung des optimalen Ganges vor der Einfahrt in eine Kurve, nach einem der vorangehenden Ansprüche, **dadurch gekennzeichnet, dass** die Bestimmung des Sportlichkeitszählers (FTyp) nach aus dem Stand der Technik bekannter Art und Weise anhand einer Auswertung der Fahrweise des Fahrers und der hierfür relevanten Parameter erfolgt.

**Claims**

1. Method for determining and shifting the optimum gear before driving into a bend for a motor vehicle comprising an automatic transmission, wherein a cornering speed limit is determined for a bend, detected by a navigation device by means of a digital map in the course of the road lying ahead, as a function of vehicle data, bend data and carriageway data, **characterized in that** the cornering speed limit is additionally determined as a function of a sportiness meter (FTyp), wherein the current optimum gear for the bend lying ahead is determined on the basis of the determined cornering speed limit and the sportiness meter (FTyp), and wherein after the determination of the current optimum gear it is checked whether the current optimum gear deviates from the engaged gear (RGA DEST), wherein shifting down into the current optimum gear occurs when a deviation is detected and a driver's action is occurring which brings about a deceleration of the vehicle and/or a reduction in the speed of the vehicle.

2. Method for determining and shifting the optimum gear before driving into a bend, according to Claim 1, **characterized in that**, in the event of shifting down into the current optimum gear requiring shifting down by several gearspeeds, the shifting back takes place in a graduated fashion.

3. Method for determining and shifting the optimum gear before driving into a bend, according to Claim 1 or 2, **characterized in that** shifting down takes place when the distance of the vehicle from the bend lying ahead is within an applicable range.

4. Method for determining and shifting the optimum gear before driving into a bend, according to Claim 1, 2 or 3, **characterized in that** at the same time as the shifting down is initiated, an adjustable timer is started, up to the expiry of which further shifting down is not possible, wherein if the adjustable timer has expired, the current optimum gear speed is determined again and it is checked again whether the current optimum gear deviates from the engaged gear (RGA DEST), and whether a driver's action is occurring which brings about a deceleration of the vehicle and/or a reduction in the speed of the vehicle, wherein if these preconditions are met renewed shifting down is carried out, and wherein this step is repeated until the current optimum gear does not deviate from the engaged gear (RGA_DEST) or until no driver action is occurring which brings about a deceleration in the vehicle and/or no reduction in the speed of the vehicle.

5. Method for determining and shifting the optimum gear before driving into a bend, according to Claim 1, 2, 3 or 4, **characterized in that** in order to determine the cornering speed limit the absolute cornering speed limit (v_grenz), i.e. the maximum possible speed in the case of a specific bend radius, a specific roadway banking and predefined vehicle data without exceeding the grip limit of the tyres is calculated, wherein the cornering speed limit is determined from the absolute cornering speed limit as a function of a sportiness meter (FTyp) of the driver, wherein the cornering speed limit also increases as the sportiness meter (FTyp) increases, and conversely, and **in that** the current optimum gear is determined as a function of the cornering speed limit and of the sportiness meter (FTyp), wherein a high value for the sportiness meter (FTyp) corresponds to low gear, and a low value for the sportiness meter (FTyp) corresponds to a high gear.

6. Method for determining and shifting the optimum gear before driving into a bend, according to Claim 5, **characterized in that** a first characteristic diagram KF_cornering speed limit is formed and stored in the transmission controller, by means of which characteristic diagram KF_cornering speed limit the cornering speed limit is determined as a function of the sportiness meter FTyp and the carriageway data, wherein in the event of the roadway banking $\beta$ being 0°, the cornering speed limit for a predefined wheel gauge, a predefined height of the central gravity and for a predefined maximum coefficient of friction is a function of the bend radius $r_k$ which is supplied by means of the navigation device and the digital map, and of the sportiness meter (FTyp), and **in that** a second characteristic diagram KF_ideal_gear is formed and is stored in the transmission controller, by means of which second characteristic diagram KF ideal gear the current optimum gear is determined as a function of the cornering speed limit, which can be determined from the characteristic diagram KF_cornering speed limit, and of the sportiness meter (FTyp).

7. Method for determining and shifting the optimum gear before driving into a bend, according to one of the preceding claims, **characterized in that** the sportiness meter (FTyp) is determined in a manner which is known from the prior art, using an evaluation of the driving style of the driver and the parameters which are relevant therefor.

**Revendications**

1. Procédé destiné à déterminer et à enclencher la vitesse optimale avant d'aborder un virage sur un véhicule automobile comprenant une boîte de vitesses automatique, une vitesse limite en virage étant déterminée pour un virage identifié dans le tracé de la route en amont par un appareil de navigation au moyen d'une carte numérique en fonction de données relatives au véhicule et au virage ou à la voie de circulation, **caractérisé en ce que** la vitesse limite en virage est déterminée en supplément par un compteur de conduite sportive (Ftyp), à l'aide de la vitesse limite en virage déterminée et du compteur de conduite sportive (Ftyp), la vitesse optimale actuelle étant déterminée pour le virage situé en amont et après la détermination de la vitesse optimale actuelle, il est vérifié si la vitesse optimale actuelle est différente de la vitesse (RGA_DEST) enclenchée, une rétrogradation dans la vitesse optimale actuelle s'effectuant si une différence est constatée et en présence d'une réaction du conducteur provoquant un ralentissement du véhicule et/ou d'une réduction de la vitesse du véhicule.

2. Procédé destiné à déterminer et à enclencher la vitesse optimale avant d'aborder un virage selon la revendication 1, **caractérisé en ce que**, pour le cas où une rétrogradation dans la vitesse optimale actuelle requiert une rétrogradation de plusieurs vitesses, la rétrogradation s'effectue par étages.

3. Procédé destiné à déterminer et à enclencher la vitesse optimale avant d'aborder un virage selon la revendication 1 ou la revendication 2, **caractérisé en ce qu'**une rétrogradation s'effectue si l'éloignement du véhicule par rapport au virage en amont se situe dans une fourchette applicable.

4. Procédé destiné à déterminer et à enclencher la vitesse optimale avant d'aborder un virage selon la revendication 1, 2 ou 3, **caractérisé en ce que** simultanément à l'initiation de la rétrogradation, un minuteur réglable est lancé, jusqu'à l'expiration duquel une rétrogradation supplémentaire n'est pas possible, après expiration du minuteur réglable, la vitesse optimale actuelle étant redéterminée et il est revérifié si la vitesse optimale actuelle est différente de la vitesse enclenchée (RGA_DEST) et si on est en présence d'une réaction du conducteur provoquant un ralentissement du véhicule et/ou d'une réduction de la vitesse du véhicule, en présence desdites conditions, une nouvelle rétrogradation étant effectuée et cette étape étant répétée jusqu'à ce que la vitesse optimale actuelle ne se différencie plus de la vitesse enclenchée (RGA_DEST) ou jusqu"à ce qu'on ne soit en présence d'aucune réaction du conducteur provoquant un ralentissement du véhicule et/ou d'aucune réduction de la vitesse du véhicule.

5. Procédé destiné à déterminer et à enclencher la vitesse optimale avant d'aborder un virage selon la revendication 1, 2, 3 ou 4, **caractérisé en ce que** pour déterminer la vitesse limite en virage, il est d'abord calculé la vitesse limite en virage (v_grenz) absolue, c'est-à-dire la vitesse maximale possible pour un virage d'un certain rayon, d'un certain dévers et pour des données prédéfinies relatives au véhicule, sans dépasser la limite d'adhérence des pneus, la vitesse limite en virage étant recherchée à partir de la vitesse limite en virage absolue, en fonction d'un compteur de conduite sportive (FTyp) du conducteur, la vitesse limite en virage augmentant également au fur et à mesure de l'augmentation du compteur de conduite sportive (FTyp) et inversement et **en ce que** la vitesse optimale actuelle est déterminée en tant que fonction de la vitesse limite en virage et du compteur de conduite sportive (FTyp), une valeur élevée pour le compteur de conduite sportive (FTyp) correspondant à un rapport de vitesse bas et une faible valeur pour le compteur de conduite sportive (Ftyp) correspondant à un rapport de vitesse haut.

6. Procédé destiné à déterminer et à enclencher la vitesse optimale avant d'aborder un virage selon la revendication 5, **caractérisé en ce qu'**un premier diagramme caractéristique KF_Kurvengrenzgeschwindigkeit est créé et sauvegardé dans la commande de la boîte de vitesses, au moyen duquel la vitesse limite en virage est recherchée en tant que fonction du compteur de conduite sportive FTyp et des données relatives à la voie de circulation, pour le cas où le dévers $\beta$ est de 0°, la vitesse limite en virage pour un écartement prédéfini des roues, une hauteur prédéfinie du centre de gravité et pour un coefficient d'adhérence maximal prédéfini étant une fonction du rayon de virage $r_k$ fourni par l'appareil de navigation et par la carte numérique et du compteur de conduite sportive (FTyp) et **en ce qu'**un deuxième diagramme caractéristique KF_Idealer_Gang est créé et sauvegardé dans la commande de la boîte de vitesses, au moyen duquel la vitesse optimale actuelle est déterminée en tant que fonction de la vitesse limite en virage qui est définissable à partir du diagramme caractéristique KF_Kurvengrenzgeschwindigkeit et du compteur de conduite sportive (FTyp).

7. Procédé destiné à déterminer et à enclencher la vitesse optimale avant d'aborder un virage selon l'une quelconque des revendications précédentes, **caractérisé en ce que** la détermination du compteur de conduite sportive (FTyp) s'effectue d'une manière connue par l'art antérieur, à l'aide d'une évaluation du mode de conduite du conducteur et des paramètres déterminants à cet effet.

|  | 20 km/h | 40 km/h | 70 km/h | 100 km/h | 150 km/h | 200 km/h |
|---|---|---|---|---|---|---|
| 1 | 3 | 4 | 5 | 6 | 7 | 8 |
| 50 | 3 | 4 | 5 | 6 | 7 | 8 |
| 100 | 3 | 4 | 5 | 6 | 7 | 8 |
| 101 | 2 | 3 | 4 | 5 | 6 | 7 |
| 150 | 2 | 3 | 4 | 5 | 6 | 7 |
| 200 | 2 | 3 | 4 | 5 | 6 | 7 |

Kurvenradius → KF Kurvengrenzgeschwindigkeit

FTyp →

→ KF Idealer Gang →

Fahreraktion && RGA_DEST > Idealer Gang? → nein → keine Modifikation

ja ↓

aktive Rückschaltung

↓

Timer abgelaufen?

|  | 20m | 50m | 100m | 150m | 200m | 300m |
|---|---|---|---|---|---|---|
| 1 | 23 | 36 | 50 | 62 | 71 | 88 |
| 50 | 27 | 43 | 60 | 74 | 85 | 105 |
| 100 | 32 | 50 | 70 | 86 | 99 | 123 |
| 101 | 36 | 57 | 80 | 98 | 114 | 140 |
| 150 | 41 | 64 | 90 | 111 | 128 | 158 |
| 200 | 45km/h | 71km/h | 100km/h | 123km/h | 142km/h | 175km/h |

Fig. 1

Fig. 2

C    A    B

t_0    t_1  t_2    t_3    t

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006030528 A1
- EP 897496 B1

- DE 4201142 C2
- EP 0831255 B1